**Europäisches Patentamt**

**European Patent Office**

**Office européen des brevets**

(19)

(11) Numéro de publication: **0 117 188**

**A1**

(12) **DEMANDE DE BREVET EUROPEEN**

(21) Numéro de dépôt: **84400250.1**

(22) Date de dépôt: **06.02.84**

(51) Int. Cl.³: **F 16 K 11/06**
**F 16 K 27/04**

(30) Priorité: **08.02.83 FR 8301938**

(43) Date de publication de la demande:
**29.08.84 Bulletin 84/35**

(84) Etats contractants désignés:
**AT BE CH DE GB IT LI LU NL SE**

(71) Demandeur: **AXINOVE**
**88 avenue du Général de Gaulle**
**F-92130 Issy-les-Moulineaux(FR)**

(71) Demandeur: **Mermet, Gérard**
**40, rue Pergolèse**
**F-75116 Paris(FR)**

(72) Inventeur: **Mermet, Gérard**
**40, rue Pergolèse**
**F-75116 Paris(FR)**

(74) Mandataire: **Corre, Jacques Denis Paul et al,**
**Cabinet Regimbeau 26, Avenue Kléber**
**F-75116 Paris(FR)**

(54) **Procédé de distribution et de dosage d'un mélange de fluides, ainsi que dispositif formant robinet mélangeur pour la mise en oeuvre de celui-ci.**

(57) La présente invention concerne un procédé et un dispositif mélangeur de fluides. Conformément à l'invention, on déplace, dans le robinet mélangeur, un élément mobile (20) sur un élément fixe (15) muni d'orifices d'entrée reliés respectivement à des conduits (18,19) d'arrivée de fluides chaud et froid. L'élément mobile (20) est muni d'ouvertures (22a, 22b, 22c) qui modifient, lors de déplacement de l'élément mobile (20), la section libérée des orifices d'entrée (16, 17) et d'un orifice d'évacuation (14), pour moduler d'une part la température du mélange de fluides, d'autre part le débit, selon une pré-programmation établie par les formes et dimensions des ouvertures.

FIG. 3

PROCEDE DE DISTRIBUTION ET DE DOSAGE D'UN MELANGE DE FLUIDES, AINSI QUE DISPOSITIF FORMANT ROBINET MELANGEUR POUR LA MISE EN OEUVRE DE CELUI-CI.

La présente invention concerne les systèmes mélangeurs de fluides, notamment d'eau.

La présente invention concerne plus précisément un procédé de distribution et de dosage d'un mélange de fluides, ainsi qu'un robinet mélangeur à plaques, du type dénommé classiquement "mitigeur", adapté pour régler deux paramètres du mélange de fluides, à savoir d'une part, la température, d'autre part, le débit.

On connaît déjà de nombreux systèmes mélangeurs à plaques.

Pour la bonne compréhension de la présente invention, on se reportera d'ailleurs utilement, aux brevets des Etats-Unis d'Amérique n° 2 503 881 et n° 2 601 966, ainsi qu'aux brevets ou demandes de brevets Français n° 2 199 387, 2 403 502, 2 415 769, 2 466 689, 2 466 692 et 2 505 009 qui décrivent et/ou représentent de tels systèmes mélangeurs à plaques.

On connaît ainsi des systèmes mélangeurs qui comprennent une plaque fixe solidaire du corps de robinet et une plaque mobile en appui contre la plaque fixe. Chacune des plaques est munie d'ouvertures dont le recouvrement est susceptible d'être modifié par déplacement de la plaque mobile grâce à un organe de commande.

De préférence, la plaque fixe comporte deux orifices d'entrée reliés respectivement à des conduits d'arrivée de fluide chaud et de fluide froid, ainsi qu'un orifice de sortie relié à un conduit d'évacuation du mélange de fluides.

La plaque mobile comporte au moins une ouverture dont la position, déterminée par l'organe de commande déplaçant cette plaque, définit la section libérée de chacun des orifices de la plaque fixe.

On connaît plus précisément des robinets mélangeurs à plaques dans lesquels les sections respectives, généralement rectangulaires, des orifices ménagés dans la plaque fixe et dans la plaque mobile, sont telles que lorsque la plaque mobile est déplacée dans une direction rectiligne donnée, la section ouverte cumulée des orifices d'entrée de la plaque fixe soit constante, mais leur rapport modifié, pour régler la température du mélange de fluides sortant, à débit constant, tandis que lorsque la plaque mobile est déplacée dans une seconde direction perpendiculaire à la direction rectiligne donnée, le rapport entre les sections ouvertes des orifices d'entrée de la plaque fixe soit constant, mais la section ouverte cumulée de ces orifices soit modifiée, pour régler le débit du mélange de fluides à température constante de celui-ci.

Un tel mélangeur à plaques est décrit notamment dans le brevet Français 2 466 692.

L'organe de commande décrit et représenté dans ce document est formé d'un levier de commande articulé sur une rotule intermédiaire portée par le corps du robinet.

Un bras du levier de commande, en saillie d'un côté de la rotule, coopère directement ou indirectement avec la plaque mobile, tandis qu'un bras opposé fait saillie en dehors du corps de mélangeur proprement dit.

Le levier de commande est ainsi déplaçable dans l'espace pour permettre toutes les combinaisons possibles température/débit.

Dans la pratique, on constate que le réglage d'un levier de commande est complexe et que l'utilisateur doit opérer de nombreux tâtonnements afin d'obtenir la combinaison température/débit désirée.

Tel que cela est décrit et représenté dans la demande de brevet en France n° 2 415 769, on a également proposé des dispositifs de commande dédoublés pour permettre de régler le débit, à température constante, en agissant sur un premier organe, ou inversement, régler la température, à débit constant, en agissant sur un second organe.

Quelle que soit la disposition adoptée, il s'avère que de tels dispositifs ne donnent pas pleinement satisfaction. En particulier, les ensembles, mitigeurs proprement dits et dispositifs de commande, proposés à ce jour, sont coûteux. La présente invention vient maintenant proposer un nouveau procédé de distribution et de dosage d'un mélange de fluides, ainsi qu'un nouveau robinet mitigeur qui s'avère beaucoup plus économique que les dispositifs antérieurs, ainsi que robuste, fiable, de commande simple et particulièrement bien adapté aux besoins de l'utilisateur.

Le procédé de distribution et de dosage d'un mélange de fluides conforme à la présente invention permet de régler deux paramètres du mélange de fluides, en sortie, à savoir la température et le débit, par déplacement relatif de deux éléments en appui réciproque, dont l'un, fixe, est muni de deux orifices d'entrée séparés, reliés respectivement à un conduit d'arrivée de fluide froid et à un conduit d'arrivée de fluide chaud, et l'autre, mobile, muni d'une ouverture susceptible de venir en communication avec un orifice d'évacuation et avec lesdits orifices d'entrée ; le procédé consiste plus précisément à déplacer le second élément, sur le premier, selon une trajectoire unique, et en modulant les surfaces en recouvrement de ladite ouverture et desdits orifices, sur la trajectoire de déplacement du second élément, à faire varier progressivement entre deux valeurs extrêmes l'un des paramètres du mélange de fluides, tout en faisant osciller l'autre paramètre entre deux extrêmes, pour distribuer, en fonction de chaque position du second élément, un mélange de fluides répondant à un couple température/débit préétabli.

Tel que cela apparaîtra plus clairement à la lecture de la description qui va suivre, la présente invention repose sur la constatation faite par la Demanderesse que dans la réalité, les besoins des utilisateurs sont limités à un certain nombre de combinaisons privilégiées et que, dans ces conditions, l'offre des mitigeurs actuels qui autorisent l'ensemble des combinaisons température/débit comprises entre deux valeurs extrêmes de chacune des variables,est bien supérieure à la demande.

Le dispositif mélangeur de fluides pour la mise en oeuvre du procédé, conforme à la présente invention, est du type comprenant un corps qui porte un premier élément fixe muni de deux orifices d'entrée séparés, reliés respectivement à un conduit d'arrivée du fluide froid, et à un conduit d'arrivée du fluide chaud, et qui loge un second élément en appui contre le premier, muni d'au moins une ouverture en communication avec un orifice d'évacuation, et déplaçable pour régler la température et le débit du fluide, qui est caractérisé plus précisément par le fait que le second élément est guidé sur le premier selon une trajectoire unique, et actionné par un organe de commande, et par le fait que le contour de l'ouverture prévue dans le second élément définit une variation progressive entre deux extrêmes de l'un des paramètres du fluide en sortie, lors du déplacement du second élément, ainsi que, simultanément, une oscillation du second paramètre entre deux extrêmes.

Un tel dispositif permet en particulier de supprimer les tâtonnements inhérents aux systèmes antérieurs, d'offrir un grand confort d'utilisation, ainsi qu'une bonne esthétique, et surtout un prix de revient particulièrement bas.

Selon une première variante de réalisation, le dispositif mélangeur de fluides conforme à l'invention comporte un second élément qui, initialement, obture les orifices, et dont l'ouverture, lors de son déplacement, libère progressivement l'orifice d'entrée du premier élément associé à l'arrivée de fluide froid, puis une section décroissante de celui-ci, tout en libérant alors une section croissante de l'orifice d'entrée associé au conduit d'arrivée du fluide chaud, ladite ouverture définissant simultanément une restriction, en amont de l'orifice d'évacuation, dont la section oscille entre deux extrêmes.

Selon une seconde variante de réalisation, le dispositif mélangeur de fluides conforme à l'invention comporte un second élément qui obture initialement les orifices et dont l'ouverture, lors de son déplacement, définit en amont de l'orifice d'évacuation, une restriction dont la section varie progressivement entre deux extrêmes, tout en libérant des sections respectives des orifices d'entrée associés au conduit d'arrivée du fluide froid et au conduit d'arrivée du fluide chaud, selon un rapport qui oscille entre deux valeurs extrêmes.

De préférence, le second élément est guidé en rotation en appui sur le premier.

Selon un premier mode de réalisation avantageux, conforme à la présente invention, le second élément est formé d'un cylindre comportant à l'une de ses extrémités une paroi circulaire en appui contre le premier élément, ladite paroi circulaire présentant au moins une ouverture, susceptible de libérer les orifices d'entrée du premier élément, et le cylindre étant muni d'une ouverture définissant la restriction, qui est susceptible de venir en regard de l'orifice d'évacuation.

Selon une seconde variante de réalisation avantageuse, le second élément est formé d'une paroi en appui contre le premier élément et muni d'au moins une ouverture susceptible de libérer les orifices d'entrée du premier élément pour définir simultanément la restriction assurant le réglage du débit et le rapport des sections respectives libérées des orifices d'entrée déterminant la température du mélange de fluides.

Selon une caractéristique de la présente invention, les bords de l'ouverture prévue dans la paroi circulaire sont conformés pour que, lors du déplacement du second élément, la section libérée des orifices d'entrée associés aux conduits d'arrivée de fluide froid et de fluide chaud ait respectivement tendance à décroître et à croître, et par le fait que l'ouverture ménagée dans le cylindre est formée d'une pluralité de lobes passant consécutivement en vis-à-vis de l'orifice d'évacuation.

Selon une autre caractéristique de la présente invention, la paroi en appui contre le premier élément comporte au moins :

- une première zone qui obture totalement les orifices d'entrée du premier élément,

- une seconde zone qui libère progressivement au moins l'orifice d'entrée associé au conduit d'arrivée de fluide froid,

- une troisième zone qui libère une section cumulée variable des orifices d'entrée prévus dans le second élément tout en libérant une section croissante de l'orifice d'entrée associé au conduit d'arrivée de fluide chaud,

    - une quatrième zone qui libère une section cumulée croissante des deux orifices d'entrée tout en maintenant sensiblement constant le rapport des sections respectives libérées des deux orifices.

    Selon encore une autre caractéristique de la présente invention, la paroi en appui contre le premier élément comporte au moins :

    - une première zone qui obture totalement les orifices d'entrée du premier élément,

    - une seconde zone qui libère progressivement l'orifice d'entrée associé au conduit d'arrivée d'eau froide,

    - une troisième zone qui libère une section croissante de l'orifice d'entrée associé au conduit d'arrivée de fluide chaud, tout en gardant sensiblement constante la section cumulée libérée des deux orifices,

    - une quatrième zone qui libère une section cumulée décroissante des deux orifices d'entrée, tout en maintenant sensiblement constant le rapport des sections respectives libérées des deux orifices d'entrée,

    - une cinquième zone qui libère une section croissante de l'orifice d'entrée associé au conduit d'arrivée de fluide chaud, tout en maintenant sensiblement constante la section cumulée libérée des deux orifices d'entrée,

    - une sixième zone qui libère une section cumulée croissante des deux orifices d'entrée tout en maintenant sensiblement constant le rapport de sections respectives libérées des deux orifices d'entrée.

    D'autres caractéristiques et avantages de la présente invention apparaîtront à la lecture de la description détaillée qui va suivre, et en regard des dessins annexés donnés à titre d'exemple non limitatif et sur lesquels :

- les figures 1 et 2 illustrent schématiquement deux graphiques représentant les combinaisons température/débit autorisées par un procédé et un dispositif conformes à la présente invention, en fonction du déplacement dudit second élément,

- la figure 3 représente une vue schématique, en coupe axiale, d'un robinet mitigeur conforme à la présente invention,

- la figure 4 représente une vue schématique, en perspective d'un second élément incorporé dans le robinet représenté sur la figure 3,

- la figure 5 représente une vue schématique en perspective d'un organe de commande extérieur pour le robinet représenté sur la figure 3,

- la figure 6 représente une vue en plan de la paroi circulaire extrême en appui contre le premier élément, du second élément représenté sur la figure 4,

- les figures 7, 8 et 9 représentent trois vues en plan illustrant trois variantes de réalisation d'un autre second élément conforme à la présente invention.

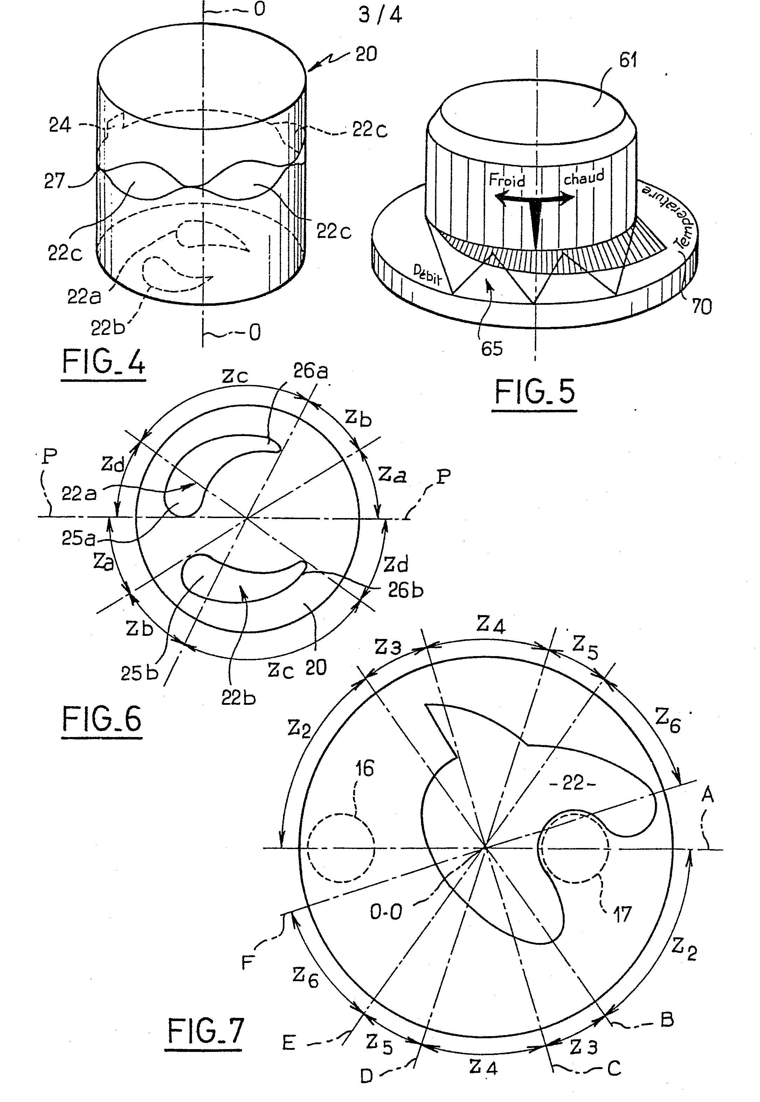

Il apparaîtra clairement à l'examen des dessins annexés, et en particulier, des figures 6 à 9, que la géométrie des ouvertures prévues dans le second élément du système mélangeur, est complexe, et difficile à décrire dans le détail. Pour ces raisons, on considèrera par la suite, que ces dessins sont intégrés à la présente description par la référence qui leur est faite ici, pour incorporer à la description les caractéristiques techniques représentées par les dessins et non exposées dans le détail par la suite de la description.

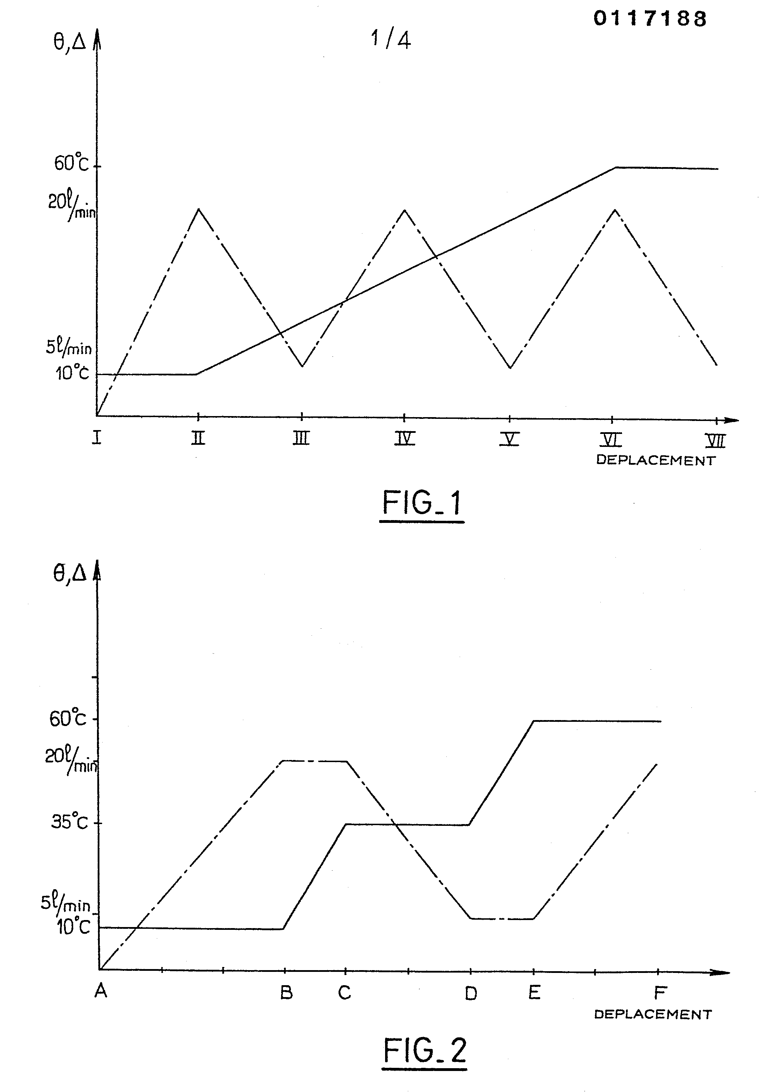

On va analyser, dans un premier temps, les graphiques représentés sur les figures 1 et 2.

Celles-ci représentent les combinaisons, température $\theta$ et débit $\Delta$, déterminées conformément à la présente invention par le déplacement de l'organe de commande du dispositif mélangeur.

Plus précisément, on a représenté sur les figures 1 et 2 la courbe de variations de la température $\theta$ par une ligne continue, tandis que la courbe représentative du débit $\Delta$ est

représentée en traits interrompus.

A la différence des mitigeurs antérieurement proposés qui permettaient l'ensemble des combinaisons température/débit comprises entre deux valeurs extrêmes de chacune des variables, la présente invention propose de limiter à un certain nombre de combinaisons privilégiées les variations de ces paramètres.

Ainsi, par exemple, selon la variante représentée sur la figure 2, lorsque l'organe de commande a été déplacé sur 50 % de sa trajectoire totale, le dispositif mélangeur impose une température de mélange de fluides en sortie de 35°C, et un débit de 14 l/mn. Pour chacune des positions de l'organe de commande, correspond une seule et unique valeur de la température d'une part et du débit d'autre part, du mélange de fluides en sortie. La position de l'organe de commande doit donc être choisie en conséquence.

Bien entendu, les valeurs numériques indiquées sur les graphiques des figures 1 et 2 ne sont données qu'à titre d'exemples non limitatifs, les valeurs étant, dans la pratique, susceptibles de varier en fonction des conditions d'utilisation et des valeurs de température d'arrivée d'eau chaude et d'eau froide.

De même, l'allure des courbes représentées sur les figures 1 et 2, n'est donnée qu'à titre d'exemples non limitatifs et pourra prendre de nombreuses autres formes couvertes par la présente invention. Ces courbes sont déterminées pour répondre aux combinaisons privilégiées (de nombre toujours limité) correspondant aux besoins des utilisateurs.

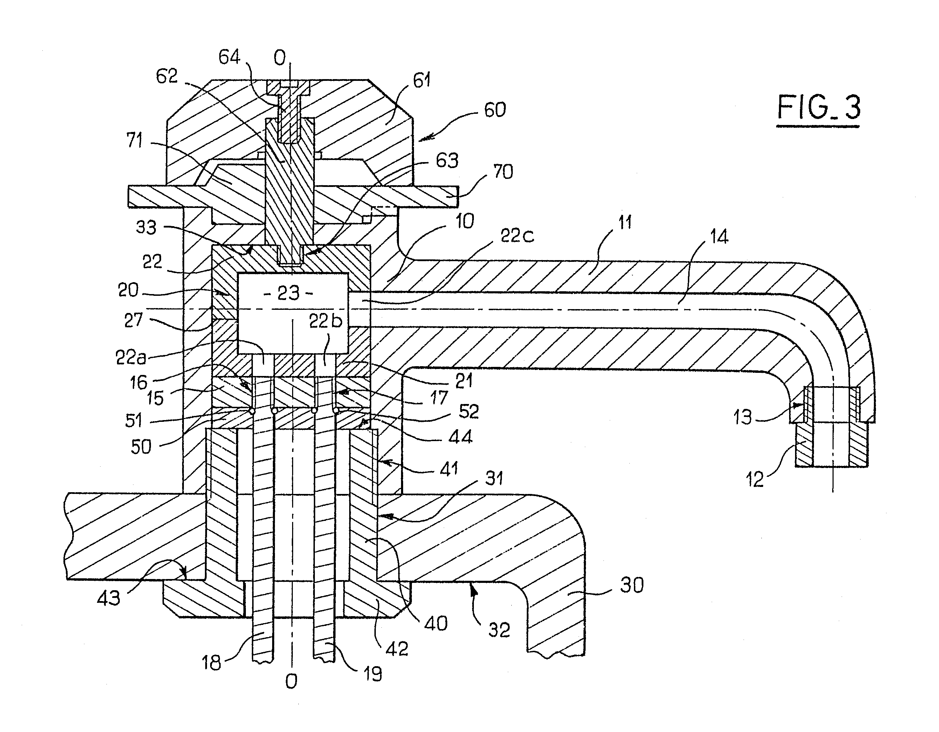

On va maintenant décrire le robinet mélangeur représenté schématiquement sur la figure 3.

Tel que cela apparaît sur cette figure 3, le dispositif mélangeur de fluides conforme à la présente invention comprend un corps 10 qui loge deux éléments 15, 20 susceptibles de déplacement relatif, en appui réciproque.

Un premier élément 15, fixe, est muni de deux orifices d'entrée séparés 16, 17 reliés respectivement à un conduit 18 d'arrivée de fluide chaud et à un conduit 19 d'arrivée de fluide froid. Le second élément 20 en appui constant contre le premier est muni d'une pluralité d'ouvertures 22a, 22b et 22c susceptibles de venir en communication avec un conduit d'évacuation 11.

Un organe de commande 60 relié à l'élément 20 mobile permet d'assurer le déplacement de celui-ci.

Plus précisément, tel que cela sera précisé par la suite, par déplacement du second élément 20 on module d'une part, la section d'une restriction, en amont du conduit d'évacuation, pour régler en conséquence le débit du mélange de fluides, ainsi que le rapport des sections libérées des orifices d'entrée 16 et 17, pour régler en conséquence la température du mélange de fluides.

Plus précisément, le procédé conforme à la présente invention consiste à déplacer le second élément 20, sur le premier 15, selon une trajectoire unique, en l'espèce,(selon le mode de réalisation représenté), une rotation autour de l'axe référencé O-O, pour moduler en conséquence les surfaces en recouvrement des ouvertures (22a, 22b, 22c) et des orifices (16, 17) de façon à faire varier progressivement entre deux valeurs extrêmes l'un des paramètres du fluide, tout en faisant osciller le second paramètre entre deux extrêmes.

On entend ici par "osciller" une variation alternée croissante et décroissante de l'un des paramètres. Le nombre ainsi que l'allure desdites croissances et décroissances pourront bien entendu être choisis quelconques.

Conformément aux courbes représentées sur la figure 1, on peut par exemple prévoir :

. un premier palier (I-II) de température (10°C) et simultanément une croissance du débit (0 à 20 l/mn), puis

. une croissance (II-VI) progressive de la température (10°C à 60°C) accompagnée d'une pluralité d'oscillations de l'amplitude du débit (5 l /mn - 20 l/mn), et enfin,

. un palier (VI-VII) de température maximale (60°C) accompagné d'une décroissance du débit (20 l/mn- 5 l/mn).

Une telle caractéristique permet d'obtenir une large variation possible de débit avec de l'eau fraîche ou avec de l'eau chaude.

De même, tel que cela est représenté sur la figure 2, on peut prévoir :

. un premier palier (A-B) de température minimale (10°C) accompagné d'une croissance progressive du débit, d'une valeur nulle jusqu'à une valeur maximale (20 l/mn),

. une croissance progressive (B-C) de la température jusqu'à une température moyenne (10°C-35°C) accompagnée d'un débit constant (20 l/mn),

. un palier (C-D) en température moyenne (35°C) accompagné d'une décroissance du débit du mélange (20 l/mn - 5 l/mn),

. une croissance (D-E) en température jusqu'à une température maximale (60°C) accompagnée d'un palier de débit minimal (5 l/mn) et enfin

. un palier (E-F) de température maximale (60°C) accompagné d'une croissance du débit (5 l/mn à 20 l/mn).

Plus précisément, on reconnaît sur la figure 3, le corps 10 du robinet immobilisé sur une paroi 30, par exemple d'un lavabo, à l'aide d'une douille 40 filetée en 41 et munie d'une collerette annulaire 42. Cette dernière vient en appui au niveau d'une surface radiale 43, contre la surface inférieure 32 de la paroi 30, lorsque la douille 40, après avoir traversé un orifice 31 prévu dans cette paroi, est engagée dans un alésage fileté complémentaire prévu intérieurement à l'extrémité inférieure du corps 10.

Bien entendu, le corps 10 du dispositif mélangeur pourra être immobilisé à l'aide de tout autre dispositif approprié équivalent.

Le corps 10 se compose d'une part d'un carter enveloppant une cavité généralement cylindrique d'axe O-O et d'autre part d'un conduit d'évacuation 11, creux, dont l'alésage interne 14 communique avec l'intérieur de la cavité précitée. Le conduit d'évacuation 11 pourra là encore, prendre de nombreuses formes appropriées. De préférence, celui-ci est muni, au niveau de son extrémité libre, d'un aérateur 12, classique en soi, immobilisé sur le conduit d'évacuation 11, par exemple par filetage 13. La cavité du carter loge un premier élément fixe 15, ainsi qu'un second élément 20, mobile, et en appui contre le premier.

Plus précisément, selon le mode de réalisation représenté sur les figures, le premier élément 15 se compose d'un disque circulaire, plan, muni de deux orifices d'entrée traversants filetés 16, 17, dans lesquels sont assemblés, respectivement, un conduit 18 d'arrivée de fluide chaud et un conduit 19 d'arrivée de fluide froid. Pour assurer une bonne étanchéité du système, une bague d'étanchéité 50 peut être appliquée contre la surface du premier élément 15 opposée au second 20, et des joints toriques d'étanchéité 51 peuvent être insérés sur les conduits 18 et 19 d'arrivée de fluides, pour être logés dans des rainures annulaires prévues au niveau de la bague d'étanchéité 50, autour des conduits 18 et 19, et ce en position adjacente au premier élément 15.

Le second élément 20 est quant à lui formé d'un cylindre comportant une paroi circulaire 21 et 22 à chacune de ses extrémités. L'une des parois circulaires, 21, en appui contre le premier élément 15 présente au moins une ouverture 22a, 22b susceptible de libérer les orifices d'entrée 16, 17 du premier élément 15. La seconde paroi circulaire 22, opposée au premier élément 15 est reliée au dispositif de commande 60, pour permettre la rotation du second élément 20 autour de l'axe O-O, en appui contre le premier élément 15, pour modifier en conséquence la section libérée des orifices d'entrée 16 et 17.

La paroi cylindrique du second élément 20 est munie également d'une ouverture 22c susceptible de définir une restriction sur le trajet d'écoulement du mélange de fluides, en venant en regard du conduit d'évacuation 11.

Les conduits 18 et 19 sont ainsi susceptibles d'être portés en communication avec le conduit d'évacuation 11 par l'intermédiaire des orifices 16 et 17 associés, de la cavité 23 intérieure au second élément, et de l'ouverture 22c.

Le carter du corps 10 supporte une embase 70 fixe en rotation et comportant, sur sa surface supérieure, une protubérance 71 formant butée d'arrêt pour limiter la rotation d'un bouton de commande 61 guidé en rotation autour de l'axe O-O précité par une tige 62.

Plus précisément, cette tige 62 présente une périphérie extérieure cylindrique lisse sur la majeure partie de sa longueur, et présente une extrémité inférieure 63 filetée destinée à être engagée dans un alésage complémentaire, de préférence borgne, prévu dans la paroi circulaire supérieure 22 du second élément 20. Ainsi, la tige 62 est reliée rigidement au second élément 20. Le bouton de commande 61 est lui-même immobilisé sur la tige 62 par une vis 64 ou tout autre moyen équivalent.

Le second élément 20 utilisé dans le robinet mélangeur de la figure 3 a été représenté plus en détail sur la figure 4.

Afin de faciliter la réalisation des ouvertures dans ce second élément, et en particulier la réalisation des ouvertures 22c dans la paroi cylindrique, on peut prévoir, comme représenté figure 4, de réaliser ce second élément en deux unités présentant chacune une paroi cylindrique et une paroi circulaire.

Les ouvertures 22c sont alors ménagées sur le bord libre 27 des parois cylindriques et les unités sont portées en contact au niveau desdits bords libres. De préférence, des structures complémentaires, telles que saillie 24 et évidement complémentaire, assurent une immobilisation relative en rotation des deux unités.

En position assemblée, le second élément 20 est ainsi guidé en rotation dans la cavité du corps entre la surface radiale supérieure 33 de celle-ci et la surface radiale extrême 44 de la douille 40.

On comprend à l'examen des figures 3, 4, que toute action sur le bouton de commande extérieur 61 provoque une rotation du second élément 20 par rapport à la plaque fixe 15, de façon à modifier la surface en recouvrement des ouvertures 22a, 22b et des orifices 16 et 17 d'une part, et de l'ouverture 22c et du conduit d'évacuation 11 d'autre part.

Une telle rotation du bouton 61 permet par conséquent de régler à la fois la température et le débit du mélange de fluides sortant du conduit d'évacuation 11.

Tel que cela est représenté sur la figure 5, en 65, le bouton extérieur de commande 61 et l'embase 70 sont de préférence gravés, de façon à déterminer clairement, en fonction de la position du bouton 61 la valeur de la température et du débit de mélange de fluides qui sont "programmés mécaniquement" par le mélangeur. Cela permet notamment d'atteindre rapidement la combinaison recherchée en évitant la gêne qui pourrait être occasionnée par les variations préalables de l'un des paramètres, tels que le débit.

Selon le mode de réalisation représenté sur la figure 5, on prévoit ainsi, lors d'une rotation du bouton de commande 61 sur un angle de l'ordre de 180°, de faire varier la température du mélange de fluides progressivement entre une valeur minimale et une valeur maximale, tout en faisant osciller le second paramètre du mélange de fluides, c'est-à-dire le débit, entre deux extrêmes. Selon la représentation de la figure 5, il est ainsi prévu trois croissances et décroissances de l'amplitude du débit de mélange de fluides, entre un minimum et un maximum. Cette programmation correspond sensiblement au graphique de la figure 1.

Tel que cela a été précédemment évoqué, le second élément 20 mobile peut être formé, comme représenté sur les figures 3 et 4 d'un cylindre comportant une paroi circulaire à l'une de ses extrémités, qui comporte des ouvertures 22a, 22b qui définissent par recouvrement des orifices 16 et 17, la température de mélange de fluides et dont la paroi cylindrique définit grâce à une ouverture 22c, déplacée en regard de l'alésage interne 14 du conduit d'évacuation 11, une restriction et donc le débit du mélange de fluides.

On peut également, tel que cela est représenté sur les figures 7 à 9, utiliser un second élément 20 mobile formé d'un disque, par exemple, plan. Celui-ci remplace alors la paroi circulaire 21, et est de même guidé en rotation autour de l'axe O-O. Dans un tel cas, la ou les ouverture(s) prévue(s) dans le disque détermine(nt) à la fois la valeur de la température et la valeur du débit du mélange.

Lorsque le second élément 20 est formé d'un disque (figures 7 à 9), les formes et dimensions des ouvertures prévues dans celui-ci doivent tenir compte à la fois de l'évolution de la courbe de température et de la courbe de débit.

Bien entendu, les formes et dimensions des ouvertures ménagées dans le second élément 20 mobile, doivent être déterminées en fonction de chaque cas d'utilisation particulier. Pour cette raison, les formes particulières de ces ouvertures, qui ne sont représentées qu'à titre d'exemples non limitatifs, ne seront pas décrites en détail.

L'on va par contre expliquer par la suite les démarches que doit effectuer l'homme du métier pour déterminer le tracé desdites ouvertures 22.

Il convient tout d'abord de noter que les dimensions et formes des ouvertures 22 en question dépendent en particulier des sections des orifices 16, 17, 14 à couvrir ou à libérer, de la courbe souhaitée pour chacun des paramètres $\theta$ , $\Delta$ , de l'amplitude du déplacement opéré par l'organe de commande 60 du second élément mobile 20, et de la position desdits orifices 16, 17, 14.

Dans ces conditions, il convient :

1) de définir les courbes de variation des deux paramètres (température et débit) en fonction du déplacement du second élément mobile 20, (figures 1 et 2),

2) de choisir la section et la position des orifices (16, 17, 14) à recouvrir ou à libérer,

3) de choisir un certain nombre de points sur les courbes, et définir sur le second élément des ébauches de tracé d'ouvertures correspondant à chacun de ces points, en fonction des section et position prédéterminées des orifices,

4) de relier ces ébauches de tracé d'ouvertures entre elles pour tenir compte de l'évolution souhaitée entre les points,

5) le cas échéant, modifier les ébauches de tracé ponctuelles retenues pour tenir compte desdites évolutions.

Un tel tracé peut être effectué soit manuellement, soit par calculateur.

Bien entendu, dans le cas où le second élément 20 est formé d'un cylindre, le tracé desdites ouvertures est grandement facilité, dans la mesure où les ouvertures 22a et 22b prévues dans la paroi cylindrique 21 ne tiennent compte que de l'évolution du paramètre température, tandis que l'ouverture 22c prévue dans la paroi cylindrique ne tient compte que de l'évolution du paramètre débit.

On va maintenant préciser la géométrie des orifices 22a et 22b représentés sur la figure 6 prévus dans la paroi circulaire 21 inférieure du second élément 20 pour obtenir une variation de température analogue à celle définie figure 1.

On suppose, pour cela, que les orifices 16 et 17 prévus dans le premier élément sont diamétralement opposés et de section circulaire.

Le second élément est tourné dans le sens contraire des aiguilles d'une montre pour ouvrir le robinet,et dans le sens inverse pour le fermer.

Les orifices 22a et 22b sont sensiblement symétriques par rapport à un plan axial de la paroi cylindrique 21. D'un côté, chacun des orifices 22a et 22b présente une enveloppe arrondie 25a, 25b de section au moins égale à la section des orifices 16 et 17, de façon à libérer entièrement ceux-ci. Chacun des orifices 22a et 22b se prolonge par une forme incurvée, de section décroissante, formant sensiblement deux pointes 26a, 26b respectives dirigées l'une vers l'autre.

La forme précise et les dimensions des orifices 22a et 22b seront aisément déterminées en fonction des dimensions et formes des orifices 16 et 17 prévus dans le disque fixe 15,

16

pour déterminer lors de la rotation du second élément 20, une variation progressive de la température du mélange de fluides.

Plus précisément, les orifices 22a et 22b prévus dans la paroi plane circulaire 21 du second élément 20 sont ménagés dans des secteurs hémicirculaires respectifs de part et d'autre d'un plan axial P-P. Chacun de ces secteurs hémicirculaires se divise en une pluralité de secteurs angulaires Za à Zd définissant l'évolution de la température du mélange de fluides, en déterminant le rapport des sections libérées respectives des orifices d'entrée 16 et 17.

On aperçoit ainsi, sur la figure 6, pour chacune des portions hémicylindriques précitées, un premier secteur angulaire Za dépourvu d'ouverture. Lorsque cette première zone Za recouvre les orifices 16 et 17, le robinet est en position fermée, et aucun fluide ne sort par le conduit d'évacuation 11.

Une seconde zone Zb, côté orifice 17 associé au conduit 19 d'arrivée d'eau froide, présente une portion 25b d'ouverture de section au moins égale à l'orifice 17, tandis que la seconde zone Zb symétrique, côté orifice 16 associé au conduit 18 d'arrivée d'eau chaude, est dépourvue d'ouverture. Ainsi, lorsque les secondes zones Zb recouvrent les orifices 16 et 17, on obtient en sortie du conduit d'évacuation 11 un mélange de fluides de température basse dont le débit est réglé par la section de l'ouverture 22c disposée en regard du conduit d'évacuation 11 (et initialement par l'ouverture 25b).

Le cas échéant, et en fonction des besoins, la zone Zb côté orifice 16 peut comporter une ouverture de faible section pour rehausser légèrement la température du mélange de fluides.

Une troisième zone Zc présente côté orifice 17 associé au conduit 19 d'arrivée d'eau froide une portion d'ouverture 22b de section décroissante, tandis que la zone Zc symétrique, côté orifice 16 associé au conduit 18 d'arrivée d'eau chaude présente une portion d'ouverture 22a de section croissante. Le déplacement des zones Zc au-dessus des orifices 16 et 17, dans le sens opposé aux aiguilles d'une montre, définit une température croissante du mélange de fluides. De préférence, les dimensions des ouvertures prévues dans chacune des zones Zc sont telles que la section libérée cumulée des orifices 16 et 17 soit constante et supérieure à la section correspondante de l'ouverture 22c.

Enfin, une quatrième zone Zd côté orifice 17 est totalement dépourvue d'ouverture, tandis que la quatrième zone Zd, symétrique, côté orifice 16 présente une portion 25a d'ouverture dont la section est au moins égale à la section de l'orifice 16. Cette quatrième zone Zd définit une température maximale pour le mélange de fluides.

Il apparaît donc clairement à l'examen de la figure 6 qu'une rotation du bouton de commande 61 dans un sens contraire aux aiguilles d'une montre et ce sur un angle de rotation voisin de 180° permet successivement d'ouvrir le robinet, afin de distribuer un fluide à température basse, et d'élever progressivement la température du mélange de fluides, pour obtenir une température maximum. Une rotation du bouton de commande 61 dans le sens opposé définit une évolution inverse de la température du fluide. Dans le même temps, les lobes 22c permettent de faire osciller l'amplitude du débit entre deux extrêmes.

Pour ce faire, l'ouverture 22c est constituée de trois lobes adjacents passant consécutivement en vis-à-vis du conduit d'évacuation 11 lors de la rotation du bouton de commande 61 et du second élément 20. Les trois lobes 22c sont ainsi répartis sur la périphérie du cylindre, en position adjacente, et ce à une longueur sensiblement constante des extrémités du cylindre.

La forme particulière et les dimensions des lobes 22c seront aisément déterminées par l'homme de l'art en fonction d'une part, de la forme et des dimensions du conduit d'évacuation 11, d'autre part, de l'évolution recherchée pour le débit de mélange de fluides.

On va maintenant décrire plus en détail les modes de réalisation du second élément 20 représentés sur les figures 7 à 9, pour lesquels le second élément 20 est constitué d'un disque plan destiné à être déplacé, par rotation, en appui constant contre le premier élément 15.

18

0117188

On a ainsi représenté en trait continu sur les figures 7 à 9, les ouvertures 22 prévues dans les disques précités. D'autre part, on a représenté en traits interrompus, les orifices d'entrée 16 et 17 associés aux conduits 18 et 19 d'arrivée de fluide chaud et de fluide froid, en position d'obturation.

Chacun des trois modes de réalisation représentés sur les figures 7 à 9 , permet d'obtenir une variation des courbes température $\theta$ et débit $\Delta$ du mélange de fluides telle que représentée sur la figure 2. On a également représenté en traits interrompus sur les figures 7 à 9, les rayons du disque mobile 20 sur lesquels se trouve le centre des orifices 16 et 17 pour l'un quelconque des déplacements A à F représentés sur la figure 2.

Il ressort là encore des figures 7 à 9 que la forme particulière de l'ouverture 22 doit être déterminée en fonction des dimensions, formes et dispositions des orifices 16 et 17.

Selon ces trois modes de réalisation, les orifices 16 et 17 présentent des sections circulaires identiques.

Selon la disposition de la figure 7, les orifices 16 et 17 sont diamétralement opposés mais non équidistants par rapport au centre du disque 20 correspondant à l'axe O-O.

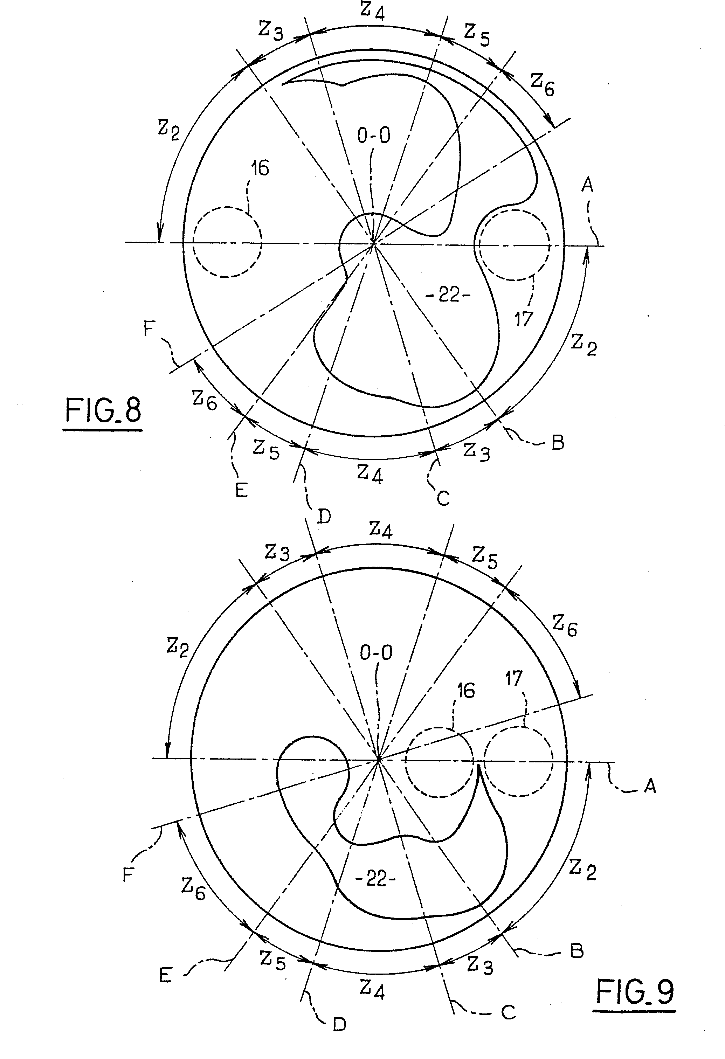

Selon le mode de réalisation de la figure 8, les orifices 16 et 17 sont sensiblement diamétralement opposés et équidistants par rapport à l'axe O-O.

Selon le mode de réalisation de la figure 9 , les deux orifices 16 et 17 sont sensiblement adjacents sur un rayon commun du disque 20.

Tel que cela a été précédemment indiqué, la courbe de variation des paramètres température et débit étant représentée sur la figure 2 et les formes, dimensions et positions des orifices d'entrée 16 et 17 étant déterminées, on trace sur le disque fixe 20, pour chacun de ces points A à F la forme de l'ouverture 22 répondant au critère imposé par la courbe de variation des paramètres température et débit, puis l'on relie entre elles ces différentes ébauches de tracé d'ouvertures pour tenir compte de l'évolution des courbes entre les points précités.

Ainsi, il apparaît que pour chacun des disques représentés sur les figures 7 à 9 :

- en A, le débit est nul,

- en B, le débit est maximum (20 l/mn) et la température minimum (10°C),

- en C, le débit est maximum (20 l/mn) et la température moyenne (35°C),

- en D, le débit est minimum ( 5 l/mn), et la température moyenne (35°C),

- en E, la température est maximum (60°C) et le débit minimum (5 l/mn),

- en F, la température est maximum (60°C) et le débit maximum (20 l/mn).

De plus,

- sur la zone Z2, la température est constante (10°C) et le débit passe d'une valeur nulle à une valeur maximum (20 l/mn),

- sur la zone Z3, le débit est constant à une valeur maximale (20 l/mn) et la température augmente jusqu'à une valeur moyenne (35°C),

- sur la zone Z4, la température est constante (35°C) et le débit décroît d'une valeur maximale (20 l/mn) à une valeur minimale ( 5 l/mn),

- sur la zone Z5, la température augmente jusqu'à une valeur maximum (60°C) tandis que le débit est constant à une valeur minimale (5 l/mn), et enfin

- sur la zone Z6, la température est constante (60°C), tandis que le débit passe d'une valeur minimum (5 l/mn) à une valeur maximum (20 l/mn).

On peut noter que la disposition de la figure 7, (orifices 16 et 17 non équidistants de l'axe O-O), permet par rapport à la disposition de la figure 8, une rotation de l'organe de commande 60 d'un angle supérieur, et donc assure une meilleure précision.

La disposition de la figure 9 permet encore d'accroître l'amplitude de la rotation de l'organe de commande en disposant côté à côte les deux orifices 16 et 17.

Il est à noter que les ouvertures 22 précédemment définies sont celles qui viennent en regard des orifices. Dans la réalité, les ouvertures prévues dans le second élément pourront présenter des sections nettement plus importantes au niveau des zones de ce second élément qui ne recouvrent en aucune façon lesdits orifices.

D'autre part, en utilisant un second élément de dimensions importantes par rapport aux sections des orifices d'entrée 16 et 17, on peut approcher, si nécessaire, une variation par paliers de chacun des paramètres, température et débit, du mélange de fluides.

Bien entendu, la présente invention n'est pas limitée aux modes de réalisation qui viennent d'être décrits à partir desquels on pourra envisager de nombreuses variantes conformes à l'esprit de l'invention.

En particulier, les deux éléments, 15 fixe et 20 mobile, ne sont pas nécessairement plans. Ainsi, ces deux éléments peuvent être incurvés et l'élément mobile déplacé par pivotement sur l'élément fixe, l'essentiel étant que ces deux éléments soient continuellement en contact.

De même, le déplacement en rotation de l'élément mobile peut, le cas échéant, être remplacé par un déplacement en translation.

Toutes ces dispositions pourront s'inspirer des dispositifs classiques pour ce qui est de la structure générale. Il en est de même de la nature des matériaux utilisés et des procédés de préparation de chaque élément.

D'autre part, les orifices, en particulier 16 et 17 peuvent présenter des sections différentes.

De façon avantageuse, la présente invention pourra être réalisée sous forme de cartouches standard destinées à être intégrées lors de l'installation, dans des ensembles plus complexes.

On peut ainsi prévoir une pluralité de systèmes standard répondant à différents besoins spécifiques. Chaque mitigeur répondant à une application spécifique privilégie les conditions d'utilisations les plus fréquentes de celle-ci, telles que par exemple débit maximum et température élevée pour le bain ou débit moyen et température moyenne pour la douche.

Il apparaît, à la lecture de la description qui précède, que les systèmes mitigeurs conformes à la présente invention représentent, tout en satisfaisant les besoins des utilisateurs, une simplification notable par rapport aux systèmes antérieurement existants, ce qui se traduit par une réduction considérable du prix de revient. Une telle simplification est due notamment à l'organe de commande. Dans la pratique, le confort et l'esthétique du nouveau dispositif sont également appréciables.

22                    0117188

<u>REVENDICATIONS</u>

1. Procédé de distribution et de dosage d'un mélange de fluides, par déplacement relatif de deux éléments en appui réciproque, dont l'un, fixe, est muni de deux orifices d'entrée séparés, reliés respectivement à un conduit d'arrivée de fluide froid et à un conduit d'arrivée de fluide chaud, et l'autre est muni d'au moins une ouverture susceptible de venir en communication avec un orifice d'évacuation et avec lesdits orifices d'entrée, pour régler deux paramètres du mélange de fluides, en sortie, la température et le débit, caractérisé par le fait qu'il consiste :

- à déplacer le second élément (20) sur le premier (15) selon une trajectoire unique, et en modulant les surfaces en recouvrement de ladite ouverture (22) et desdits orifices (16, 17), sur la trajectoire de déplacement du second élément (20),

- à faire varier progressivement entre deux valeurs extrêmes l'un des paramètres (θ) du mélange de fluides,

- tout en faisant osciller l'autre paramètre (Δ) entre deux extrêmes, pour distribuer, en fonction de chaque position du second élément, un mélange de fluides répondant à un couple température/débit préétabli.

2. Dispositif mélangeur de fluides pour la mise en oeuvre du procédé selon la revendication 1, du type comprenant un corps (10) qui porte un premier élément (15) fixe muni de deux orifices d'entrée (16,17) séparés, reliés respectivement à un conduit (18) d'arrivée de fluide chaud et à un conduit (19) d'arrivée de fluide froid et qui loge un second élément (20) en appui contre le premier, muni d'au moins une ouverture (22) en communication avec un orifice d'évacuation (11,14) et déplaçable pour régler la température et le débit du fluide, caractérisé par le fait que le second élément (20) est guidé sur le premier selon une trajectoire unique, et actionné par un organe de commande (60), et par le fait que le contour d'ouverture (22) prévu dans le second élément définit une variation progressive entre deux extrêmes de l'un des paramètres

(θ) du fluide de sortie, lors du déplacement du second élément, ainsi que simultanément, une oscillation du second paramètre (Δ) entre deux extrêmes.

3. Dispositif mélangeur de fluides selon la revendication 2, caractérisé par le fait que initialement, le second élément (20) obture les orifices, puis, lors du déplacement du second élément (20), l'ouverture (22) prévue dans celui-ci libère progressivement l'orifice d'entrée (17) du premier élément (15) associé à l'arrivée de fluide froid, puis une section décroissante de celui-ci, tout en libérant alors une section croissante de l'orifice d'entrée (16) associé au conduit d'arrivée de fluide chaud, et par le fait que l'ouverture définit simultanément une restriction (22c), en amont de l'orifice d'évacuation (11, 14), dont la section oscille entre deux extrêmes.

4. Dispositif mélangeur de fluides selon la revendication 2, caractérisé par le fait que, initialement, le second élément (20) obture les orifices, puis lors du déplacement du second élément, l'ouverture prévue dans celui-ci définit en amont de l'orifice d'évacuation (11, 14), une restriction dont la section varie progressivement entre deux extrêmes, tout en libérant des sections respectives des orifices d'entrée (16, 17) associés au conduit (19) d'arrivée de fluide froid et au conduit (18) d'arrivée de fluide chaud selon un rapport qui oscille entre deux valeurs extrêmes.

5. Dispositif mélangeur de fluides selon l'une des revendications 2 à 4, caractérisé par le fait que le second élément (20) est guidé en rotation, en appui sur le premier élément (15).

6. Dispositif mélangeur de fluide selon l'une des revendications 2 à 5, caractérisé par le fait que le second élément (20) est formé d'un cylindre comportant à l'une de ses extrémités une paroi circulaire (21) en appui contre le premier élément (15), ladite paroi circulaire (21) présentant au moins une ouverture (22a, 22b) susceptible de libérer les orifices d'entrée (16, 17) et le cylindre étant muni d'une ouverture (22c) définissant la restriction, qui est susceptible de venir en regard de l'orifice d'évacuation (11, 14) (figure 4).

7. Dispositif mélangeur de fluides selon l'une des revendications 2 à 5, caractérisé par le fait que le second élément (20) est formé d'une paroi en appui contre le premier élément (15) et munie d'au moins une ouverture (22) susceptible de libérer les orifices d'entrée (16,17) du premier élément (15) pour définir simultanément la restriction assurant le réglage du débit et le rapport des sections respectives libérées des orifices d'entrée (16, 17) déterminant la température (θ) du fluide (figures 7 à 9).

8. Dispositif mélangeur de fluides selon la revendication 6, caractérisé par le fait que les bords de l'ouverture (22a, 22b) prévus dans la paroi circulaire (21) sont conformés pour que, lors du déplacement du second élément (20), la section libérée des orifices d'entrée (16, 17) associés au conduit d'arrivée de fluide froid (19) et de fluide chaud (18) ait respectivement tendance à décroître et à croître, et par le fait que l'ouverture (22c) ménagée dans le cylindre est formée d'une pluralité de lobes passant consécutivement en vis-à-vis de l'orifice d'évacuation (11, 14) (figure 4).

9. Dispositif mélangeur de fluide selon la revendication 7, caractérisé par le fait que la paroi en appui contre le premier élément (15) comporte au moins :

- une première zone (Za) qui obture totalement les orifices d'entrée (16, 17) du premier élément (15),

- une seconde zone (Zb) qui libère progressivement au moins l'orifice d'entrée (17) associé au conduit (19) d'arrivée de fluide froid,

- une troisième zone (Zc) qui libère une section cumulée variable des orifices d'entrée (16, 17) prévus dans le second élément (15), tout en libérant une section croissante de l'orifice d'entrée associé au conduit d'arrivée de fluide chaud,

- une quatrième zone (Zd) qui libère une section cumulée croissante des deux orifices d'entrée (16, 17), tout en maintenant sensiblement constant le rapport des sections respectives libérées des deux orifices d'entrée (16, 17) (figures 2 et 6).

10. Dispositif mélangeur de fluides selon la revendication 7, caractérisé par le fait que la paroi en appui contre le premier élément comporte au moins :

- une première zone (A) qui obture totalement les orifices d'entrée (16, 17) du premier élément (15),

- une seconde zone (Z2) qui libère progressivement l'orifice d'entrée (17) associé au conduit (19) d'arrivée de fluide froid,

- une troisième zone (Z3) qui libère une section croissante de l'orifice d'entrée (16) associé au conduit d'arrivée (18) de fluide chaud, tout en gardant sensiblement constante la section cumulée libérée des deux orifices d'entrée,

- une quatrième zone (Z4) qui libère une section cumulée décroissante des deux orifices d'entrée (16, 17), tout en maintenant sensiblement constant le rapport des sections respectives libérées des deux orifices d'entrée.

- une cinquième zone (Z5) qui libère une section croissante de l'orifice d'entrée associé au conduit (18) d'arrivée de fluide chaud, tout en maintenant sensiblement constante la section cumulée libérée des deux orifices d'entrée,

- une sixième zone (Z6) qui libère une section cumulée croissante des deux orifices d'entrée, tout en maintenant sensiblement constant le rapport de sections respectives libérées des deux orifices d'entrée.

11. Dispositif mélangeur de fluides selon l'une des revendications 2 à 4, caractérisé par le fait que le second élément (20) est guidé en translation, en appui sur le premier élément (15).

12. Dispositif mélangeur de fluides selon l'une des revendications 2 à 4, caractérisé par le fait que le premier et le second élément sont incurvés et par le fait que le second élément (20) est guidé à pivotement en appui sur le premier élément (15).

0117188

1/4

FIG_1

FIG_2

0117188

FIG_3

0117188

FIG_4

FIG_5

FIG_6

FIG_7

FIG.8

FIG.9

Office européen
des brevets

**RAPPORT DE RECHERCHE EUROPEENNE**

Numéro de la demande

EP 84 40 0250

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 499 664 (PORCHER) <br> * Page 10, ligne 13 - page 13, ligne 39; figures * | 1 | F 16 K 11/06 <br> F 16 K 27/04 |
| A | FR-A-2 470 317 (HANSA METALLWERKE) | | |
| | --- | | |
| D,A | US-A-2 503 881 (MANIS) | | |
| | --- | | |
| D,A | US-A-2 601 966 (BUSICK) | | |
| | --- | | |
| D,A | FR-A-2 199 387 (PIEL) | | |
| | --- | | DOMAINES TECHNIQUES RECHERCHES (Int. Cl. ³) |
| D,A | FR-A-2 403 502 (PORCHER) | | |
| | --- | | F 16 K |
| D,A | FR-A-2 415 769 (PORCHER) | | |
| | --- | | |
| D,A | FR-A-2 466 689 (PORCHER) | | |
| | --- | | |
| D,A | FR-A-2 466 692 (PORCHER) | | |
| | --- -/- | | |

Le présent rapport de recherche a été établi pour toutes les revendications

| Lieu de la recherche <br> LA HAYE | Date d'achèvement de la recherche <br> 07-05-1984 | Examinateur <br> VAN REETH A.L.J. |
|---|---|---|

**RAPPORT DE RECHERCHE EUROPEENNE**

Office européen
des brevets

**0117188**
Numéro de la demande

EP 84 40 0250

| | **DOCUMENTS CONSIDERES COMME PERTINENTS** | | Page 2 |
|---|---|---|---|
| Catégorie | Citation du document avec indication. en cas de besoin. des parties pertinentes | Revendication concernee | CLASSEMENT DE LA DEMANDE (Int. Cl. ³) |
| D,A | FR-A-2 505 009 (FIRMA KLUDI-ARMATUREN PAUL SCHEFFER) ----- | | |
| | | | **DOMAINES TECHNIQUES RECHERCHES (Int. Cl. ³)** |

Le présent rapport de recherche a été établi pour toutes les revendications

| Lieu de la recherche LA HAYE | Date d'achèvement de la recherche 07-05-1984 | Examinateur VAN REETH A.L.J. |
|---|---|---|